# EUROPEAN PATENT APPLICATION

(11) **EP 4 606 481 A1**
(43) Date of publication of application: **27.08.2025**
(21) Application number: 25156568.5
(22) Date of filing: 07.02.2025
(51) Int. Cl.: B02C 7/08, B02C 7/12, B02C 7/17

(54) **GRINDING APPARATUS FOR RECHARGEABLE BATTERY MATERIALS**

(30) Priority: 21.02.2024 KR 20240025353
(71) Applicant: SAMSUNG SDI CO., LTD., Yongin-si, Gyeonggi-do 17084 (KR)
(72) Inventor: Bang, Seunggwon, 17084 Yongin-si, Gyeonggi-do (KR); Kwon, Seunguk, 17084 Yongin-Si Gyeonggi-do (KR); Kwon, Ilkyong, 17084 Yongin-si, Gyeonggi-do (KR); Cheo, Yunju, 17084 Yongin-si, Gyeonggi-do (KR); Lee, Jinhyon, 17084 Yongin-si, Gyeonggi-do (KR)
(74) Representative: Gulde & Partner

(57) **Abstract**

A grinding apparatus of the present disclosure includes a body member including an inlet through which raw material is introduced; a fixing member installed inside the body member; a rotation member installed inside the body member and positioned spaced apart from the fixing member; and a driving member installed outside of the body member and configured to rotate the rotation member, wherein the rotation member includes a disk coupled to the driving member; a first pattern inserted to a certain depth on the disk and including a plurality of first lines positioned parallel to each other; a second pattern inserted at a certain depth on the disk and including a plurality of second lines arranged to intersect the plurality of first lines and positioned parallel to each other; and a grinding portion that is positioned between the plurality of first lines and the plurality of second lines, and protrudes to the outside to grind raw material.

## Description

### BACKGROUND

### 1. Field

The present disclosure relates to a grinding apparatus for a rechargeable battery material.

### 2. Description of the Related Art

Rechargeable batteries are manufactured in one or more suitable shapes, and among them, a pouch battery includes an electrode assembly with a separator of an insulator (e.g., a separator made of an electrical (electron) insulator) between positive and negative electrode plates, and a thin flexible pouch inside which the electrode assembly is embedded (e.g., encased). In this case, the pouch accommodates the electrode assembly in the interior.

The electrode assembly of the rechargeable battery is largely divided into (e.g., categorized as) a winding type or kind and a stacking type or kind depending on (e.g., according to) its structure. The stacking type or kind has good or suitable structural safety and excellent or suitable spatial utility, so it is widely applied to small and medium-sized products. The stacking type or kind rechargeable battery includes (or formed by) a stack of a plurality of electrodes and separators.

The process of manufacturing an electrode for such a rechargeable battery is divided (categorized) into a wet electrode manufacturing method that uses a solvent to create an electrode active material slurry and applies the slurry to the current collector, and a dry electrode manufacturing method that does not use a solvent. That is, the manufacturing process for rechargeable battery electrodes may involve at least one selected from among two methods: wet electrode manufacturing, which uses a solvent to create an electrode active material slurry and applies it to the current collector, and dry electrode manufacturing, which does not use a solvent. The dry electrode manufacturing method produces a thin film (e.g., layer) of an electrode active material mixture using an electrode active material mixture containing an electrode active material and one or more suitable compounds on a surface (e.g., both surfaces (e.g., opposite surfaces)) of the electrode current collector. The manufactured electrode active material film is attached to the electrode current collector by heat and pressure.

Here, the electrode active material and one or more suitable compounds are ground by a grinding apparatus and then used in the film manufacturing process. Compared to the wet electrode manufacturing method, dry electrode manufacturing method has merits of reducing manufacturing costs such as energy and space desired or required for drying and non-use (e.g., the elimination) of a solvent. That is, the dry electrode manufacturing method offers advantages such as reduced manufacturing costs due to energy savings and less (e.g., no space) required for drying, as well as the elimination of solvents.

However, in order to develop excellent or suitable charge and discharge characteristics of the electrode, the thickness of the electrode active material film must be substantially uniform. Here, if the particle size of a raw material is not substantially uniform during the grinding process, it is difficult to manufacture film of substantially uniform thickness.

### SUMMARY

The present disclosure is intended to overcome the problems described above in the related art, and an aspect according to one or more embodiments of the present disclosure is directed toward a grinding apparatus that can uniformly (e.g., substantially uniformly) grind raw material that can be used to manufacture rechargeable batteries.

The technical problems to be solved by the present disclosure are not limited to those described above, and other problems not mentioned would be clearly understood by those skilled in the art from the following description. Also, additional aspects of embodiments will be set forth in part in the description, which follows and, in part, will be apparent from the description, or may be learned by practice of the presented embodiments of the disclosure.

A grinding apparatus according to one or more embodiments of the present disclosure includes a body member including an inlet through which a raw material is introduced; a fixing member inside the body member; a rotation member inside the body member and spaced and/or apart (e.g., spaced apart or separated) from the fixing member; and a driving member installed externally to (e.g., outside of) the body member and configured to rotate the rotation member, wherein the rotation member includes a disk coupled to the driving member; a first pattern inserted to a set (e.g., certain) depth on the disk and including a plurality of first lines parallel to each other; a second pattern inserted at a set (e.g., certain) depth on the disk that includes a plurality of second lines parallel to each other, the plurality of second lines crossing the plurality of first lines; and a plurality of grinding portions between the plurality of first lines and the plurality of second lines, and protruding to the outside (e.g., toward the fixing member) to grind raw material.

The second line may be positioned to be normal (e.g., perpendicular) to the first line.

The second line may be positioned to be inclined to the first line.

A cooling unit configured to cool the fixing member may be further included.

The cooling unit may include a heat exchange member installed inside the fixing member and configured to perform heat exchange with the fixing member, and a cooler installed externally to (e.g., outside of) the body member and connected to the heat exchange member.

A refrigerant may be inside the heat exchange member, and the cooler is configured to circulate the refrigerant.

The fixing member may include a penetration part that passes through the part (e.g., opening) corresponding to the inlet of the body member in an upper and lower direction to allow raw material to pass through.

The rotation member may further include a rotation blade installed in a central part of the disk and configured to grind the raw material.

The body member may include an outlet through which the raw material is discharged.

The outlet may be positioned on a lower side of the body member.

The rotation member may include a plurality of grinding regions.

Each of the plurality of grinding regions may be positioned at a set (e.g., certain) angle relative to a center of the disk.

In the plurality of grinding regions, each of the first patterns positioned in the adjacent grinding regions may be arranged to rotate relative to each other at a certain angle. That is, the first pattern in a grinding region from among the plurality of grinding regions is arranged at a set angle to the first pattern in an adjacent grinding region

In the plurality of grinding regions, each of the second patterns positioned in the adjacent grinding regions may be arranged to rotate relative to each other at a certain angle. That is, the second pattern in a grinding region from among the plurality of grinding regions are arranged at a set angle to the second pattern in an adjacent grinding region.

There may be six grinding regions.

A vertical cross-section of the grinding portion may have a trapezoid shape.

A distance between top ends of adjacent grinding portions in the rotation member may be in a range of 3 mm to 6 mm.

An angle between adjacent grinding portions in the rotation member may be in a range of 30 degrees to 50 degrees.

The disk of the fixing member and the rotation member may be of corresponding sizes.

The fixing member may have a disk shape.

According to the present disclosure, the grinding apparatus may include the rotation member that includes the first pattern, the second pattern, and the grinding sections and grinding portions, so that raw material can be ground more uniformly (e.g., substantially uniformly) than with a related art grinding apparatus.

Accordingly, in manufacturing the rechargeable battery, the active material film may be manufactured from the uniformly (e.g., substantially uniformly) ground raw material, so the active material film with an overall substantially uniform thickness may be (e.g., easily) manufactured. Therefore, if (e.g., when) manufacturing the rechargeable battery with the grinding apparatus according to one or more embodiments, the rechargeable battery with excellent or suitable charge and discharge characteristics may be manufactured.

### BRIEF DESCRIPTION OF THE DRAWINGS

The following drawings accompanying this specification illustrate embodiments of the present disclosure and, together with the detailed description of the disclosure that follows, serve to further illustrate the technical ideas of the disclosure, and the disclosure is not to be construed as limited to what is illustrated in the accompanying drawings.
FIG. 1 is a cross-sectional view showing a grinding apparatus according to one or more embodiments.
FIG. 2 is a top plan view of a rotation member included in a grinding apparatus of FIG. 1.
FIG. 3 is a top plan view showing a rotation member according to one or more embodiments.
FIG. 4 is a top plan view showing a fixing member and a cooling unit.
FIG. 5 is a top plan view showing a rotation member according to a comparative example.
FIG. 6 is a photograph of a raw material ground by a rotation member according to one or more embodiments.
FIG. 7 is a photograph of a raw material ground by a rotation member according to a comparative example.

### DETAILED DESCRIPTION

Hereinafter, one or more embodiments of the present disclosure are described with reference to the drawings. Terms and words used in the present specification and claims are not to be construed as having general or dictionary meanings, but are to be construed as having meanings and concepts that meet (e.g., align with) the technical ideas of the present disclosure based on a principle wherein the present inventors may appropriately or suitably define the concepts and terms in order to optimally describe their disclosures. Therefore, the configurations described in the example embodiments and drawings of the present disclosure are merely the preferable embodiments but do not represent all of the technical ideas of the present disclosure, and thus the present disclosure should be construed as including all changes, equivalents, and substitutions included in the scope of the present disclosure at the time of filing this application.

It should be further understood that the terms "comprise," "include" and/or "comprising," "including," if (e.g., when) used in this specification, specify the presence of stated features, integers, steps e.g., acts or tasks), operations, elements, components, and/or groups, but do not preclude the presence or addition of one or more other features, integers, steps, operations, elements, components, and/or groups thereof.

In addition, the accompanying drawings may be exaggerated in dimensions of some of the components rather than drawn to scale to facilitate understanding of the present disclosure. Additionally, like reference numbers may be assigned to like components in one or more embodiments.

The statement that two objects of a comparison are "the same" refers to "substantially the same."

Therefore, "substantially identical" may include deviations that are considered in the related art to be low - for example, deviations of no more than 5%. Additionally, the uniformity of a parameter in a given region may refer to uniformity from an average perspective.

Although the terms "first," "second," and/or the like are used to describe various constituent elements, these constituent elements are not limited by these terms. These terms are only used to distinguish one component from another, and unless specifically stated to the contrary, a first component may also be referred to as a second component.

Throughout the specification, unless otherwise stated, each component may be singular or plural.

If (e.g., when) any configuration (e.g., component) is described as arranged "on top of" (or "under") another component or "above" (or "below") another component, it may refer to that the configuration is arranged in contact with the top (or bottom) surface of the other component, as well as that other configurations (e.g., components) may be interposed between the other component and the configuration arranged on (or below) the other component.

Additionally, if a component is described as "on," "connected to," or "coupled to" another component, the components may be directly on, connected or coupled to each other, but it should be understood that other components may be "interposed" between these components, or that each component may be "on," "coupled," or "connected" through other components.

As used herein, the term "and/or" includes any one or all combinations of one or more related items. Additionally, the use of "may" if (e.g., when) describing embodiments of the present disclosure refers to "one or more embodiments of the present disclosure."

Expressions such as "at least one," if preceding a list of elements may modify an entire list of the elements and not an individual element in the list.

Throughout the specification, if (e.g., when) reference is made to "A and/or B", it refers to A, B, or A and B, unless specifically stated to the contrary, and if (e.g., when) reference is made to "C through D," it refers to C or higher and D or lower unless specifically stated to the contrary.

When a phrase such as "at least one selected from among A, B, and C," "at least one selected from among A, B, or C," "at least one selected from among A, B, and C groups" and "at least one of A, B, or C" is used to specify a list of elements A, B, and C, the phrase may refer to any and all suitable combinations.

The term "use" may be considered synonymous with the term "utilize."

As used herein, terms such as "substantially" and "about" are used as terms of approximation and not as terms of degree and are intended to explain the inherent variations of measured or calculated values that could be recognized by a person of ordinary skill in the art.

It should be understood that, although the terms "first," "second," "third," and/or the like, may be used herein to describe one or more suitable elements, components, regions, layers, and/or sections, such elements, components, regions, layers, and/or sections should not be limited by these terms. These terms are only used to distinguish one element, component, region, layer or section from another element, component, region, layer, or section. Thus, a first element, component, region, layer, or section discussed herein could be termed a second element, component, region, layer, or section, without departing from the scope of the present disclosure.

As shown in the drawings, spatially relative terms, such as "beneath," "below," "lower," "under," "above," "upper," and/or the like, may be used herein for ease of explanation to describe one element or feature's relationship to another element(s) or feature(s) as illustrated in the drawings. It should be understood that spatially relative positions are intended to encompass different orientations of the device in use or in operation, in addition to the orientations depicted in the drawings. For example, if the device in the drawings is turned over, elements described as "below," "beneath," or "under" other elements or features would then be oriented "above" the other elements or features. Thus, the term "down" can encompass both (e.g., simultaneously) an orientation of above and below.

The terms used herein are intended to describe embodiments of the present disclosure and are not intended to limit it.

Hereinafter, a grinding apparatus according to one or more embodiments will be described in more detail with reference to accompanying drawings.

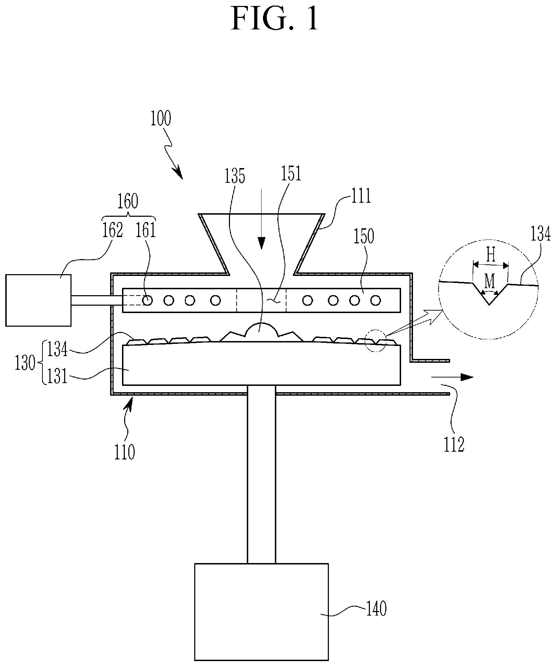

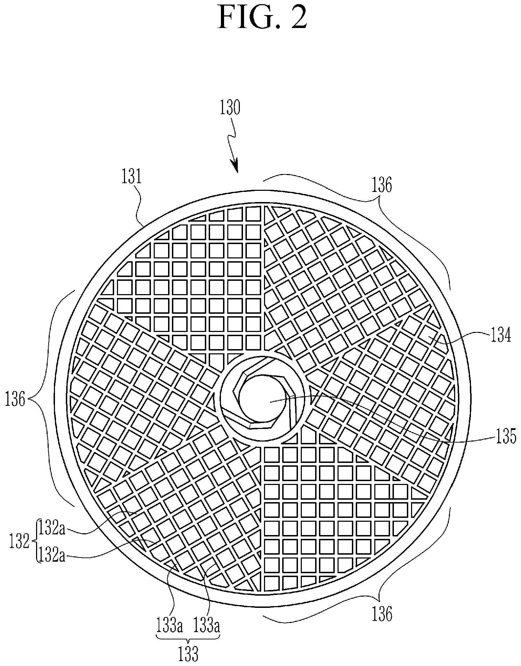

FIG. 1 is a cross-sectional view showing a grinding apparatus according to one or more embodiments. FIG. 2 is a plan view of a rotation member included in a grinding apparatus of FIG. 1 as viewed from above.

Referring to FIG. 1 and FIG. 2, a grinding apparatus 100 for a rechargeable battery material according to one or more embodiments may include a body member (e.g., a housing) 110, a fixing member (e.g., a fixed or stationary member) 150, a rotation member (e.g., a rotating member) 130, and a driving member (e.g., a driving unit) 140.

The body member 110 accommodates the fixing member 150 and the rotation member 130, which will be described in more detail later. This body member 110 includes an inlet 111 through which the raw material is input (e.g., loaded). Additionally, the body member 110 includes an optional outlet 112 through which the raw material is discharged.

In one or more embodiments, the raw material used for grinding in the grinding apparatus 100 for the rechargeable battery material according to one or more embodiments may be graphite, which is used to manufacture the active material film (e.g., layer) of the rechargeable battery, but the present disclosure is not limited thereto.

The outlet 112 may be positioned on the lower side of the body member 110. The raw material ground by the rotation member 130, which will be described in more detail later, is moved to the lower side of the body member 110. Also, the raw material may be discharged through the outlet 112 by torque generated by the rotation of the rotation member 130.

The fixing member 150 is installed inside the body member 110. The shape of the fixing member 150 may be a disk shape, for example.

The fixing member 150 may include a penetrating portion (e.g., an opening) 151. The penetrating portion 151 penetrates in an upward and downward direction through a portion corresponding to the inlet 111 of the body member 110 to allow the raw material to pass through. That is, the fixing member 150 may include an opening at a position overlapping with the inlet 111 of the body member 110 to allow the raw material to pass through. The raw material introduced into the inlet 111 may pass through the penetrating portion 151 of the fixing member 150 and flow into the space between the fixing member 150 and the rotation member 130.

The rotation member 130 is installed inside the body member 110 and is positioned to be spaced and/or apart (e.g., spaced apart or separated) from the fixing member 150. The raw material may be ground by the rotation of the rotation member 130.

The fixing member 150 described above may be positioned above the rotation member 130. The raw material inflows between the fixing member 150 and the rotation member 130. The rotation member 130 is rotated by the driving member 140, which will be described in more detail later, and the raw material may be ground into the form of small particles by continuously hitting (e.g., colliding with) the rotation member 130 and the fixing member 150. A detailed description of the rotation member 130 will be given later.

The driving member 140 is installed outside of the body member 110 and rotates the rotation member 130. The driving member 140 may be a rotation motor, for example. The driving member 140 may be positioned below the body member 110, but the present disclosure is not limited to this configuration.

The above-described rotation member 130 includes a disk 131, a first pattern 132, a second pattern 133, and a grinding portion 134, for example.

The disk 131 is coupled to the driving member 140. The shape of the disk 131 may be a disk shape, for example. The disks 131 of the aforementioned rotation member 130 and the fixing member 150 may have corresponding sizes (e.g., substantially similar in size).

In one or more embodiments, the shape of the upper side (e.g., upper surface) of the disk 131 may be formed to slope downwardly from the center to the periphery. Accordingly, the raw material ground between the rotation member 130 and the fixing member 150 may be moved to the outside of the disk 131 by its own weight (e.g., gravity).

The first pattern 132 includes a first line 132a. The first lines 132a are formed to be inserted at a set or certain depth on the disk 131 and they are positioned parallel to each other. For example, the first lines 132a may be formed as channels or grooves with a set or certain depth on the upper portion of the disk 131. The first line 132a is in the shape of a line and may be positioned at regular intervals.

The second pattern 133 includes a second line 133a. The second line 133a is formed to be inserted at a set or certain depth on the disk 131, is arranged to intersect with the plurality of first lines 132a, and is positioned parallel to each other. For example, the second lines 133a may be formed as channels or grooves with a set or certain depth on the upper portion of the disk 131. The second line 133a is in the shape of a line and may be positioned at regular intervals.

In some embodiments, the second line 133a may be positioned normal (e.g., orthogonal) to the first line 132a. In some embodiments, the shape of the horizontal cross-section of the grinding portion 134, which will be described in more detail later, may be quadrangular.

The grinding portion 134 is positioned between the first line 132a and the second line 133a, and protrudes to the outside (e.g., towards the fixing member 150) to grind the raw material. The raw material may be ground while colliding with the grinding portion 134. The shapes of the above-described first pattern 132 and the second pattern 133, and the shape of the grinding portion 134 may determine the size of the raw material being ground.

The shape of the vertical cross-section of the grinding portion 134 may be trapezoidal, for example. Here, the distance H between the uppermost ends of the grinding portions 134 adjacent to each other in the rotation member 130 may be in the range of 3 mm to 6 mm. In addition, the angle M between (e.g., the side walls of) the grinding portions 134 adjacent to each other in the rotation member 130 may be in the range of 30 degrees to 50 degrees. Having the shape of the grinding portion 134 as described above may be advantageous or desirable for grinding the raw material uniformly (e.g., substantially uniformly).

In one or more embodiments, the aforementioned rotation member 130 may further include a rotation blade 135.

The rotation blade 135 is installed in the center of the disk 131 and grinds the raw material. The grinding portion 134 may grind the raw material into a small size, but the rotation blade 135 may grind the raw material into a relatively larger size than the grinding portion 134.

The rotation blade 135 (e.g., preferentially) grinds the raw material into the larger size, and the grinding portion 134 grinds the raw material (ground by the rotation blade 135) into a relatively smaller size than the rotation blade 135. In this way, by the rotation member 130 further including the rotation blade 135, the time for grinding the raw material may be significantly shortened.

In one or more embodiments, the rotation member 130 may include a plurality of grinding regions 136.

Each of the plurality of grinding regions 136 may be positioned at a certain angle relative to the center portion of the disk 131. For example, the plurality of grinding regions 136 may radiate outward from the center portion of the disk 131. For example, there may be six grinding regions 136. In this case, each grinding region 136 may be positioned every 60 degrees relative to (e.g., around) the center portion of the disk 131.

In the plurality of grinding regions 136, each of the first patterns 132 positioned in the adjacent grinding regions 136 may be arranged to be rotated relative to each other at a certain angle. In addition, in the plurality of grinding regions 136, each of the second patterns 133 positioned in the adjacent grinding regions 136 may be arranged to be rotated relative to each other at a certain angle.

For example, if there are six grinding regions 136, each of the first patterns 132 positioned in adjacent grinding regions 136 may be arranged at an angle of 60 degrees to each other, and the second pattern 133, similar to the first pattern 132, may form an angle of 60 degrees to each other. That is, each of the first patterns 132 positioned in a first grinding region 136 may be arranged at an angle of 60 degrees to each of the first patterns 132 positioned in a second grinding region 136, and each of the second patterns 133 positioned in the first grinding regions 136 may be arranged at an angle of 60 degrees to each of the second patterns 133 positioned in the second grinding region 136.

The rotation member 130 as described above includes a plurality of grinding regions 136, and the first pattern 132 of each grinding region 136 is positioned at a different angle (e.g., from the first pattern 132 of an adjacent grinding region 136), and the second pattern 133 is also positioned at a different angle (e.g., from the second pattern 133 of an adjacent grinding region 136), so that the raw material may be ground more smoothly.

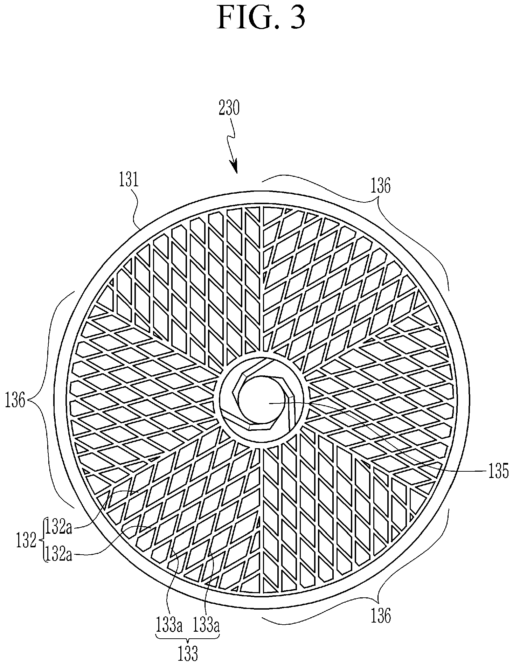

FIG. 3 is a top plan view showing a rotation member according to an embodiment.

Referring to FIG. 3, the second line 133a included in the rotation member 230 according to an example variation may be positioned at a certain angle with respect to the first line 132a. For example, the second line 133a may be positioned at an angle of 45 degrees with respect to the first line 132a. However, the second line 133a is not necessarily limited to being positioned at an angle of 45 degrees with respect to the first line 132a.

In an embodiment, the horizontal cross-section of the grinding portion 134 described above may be in the shape of a rhombus. The rotation member 130, which includes the grinding portion 134 in this shape, rotates to grind the raw material.

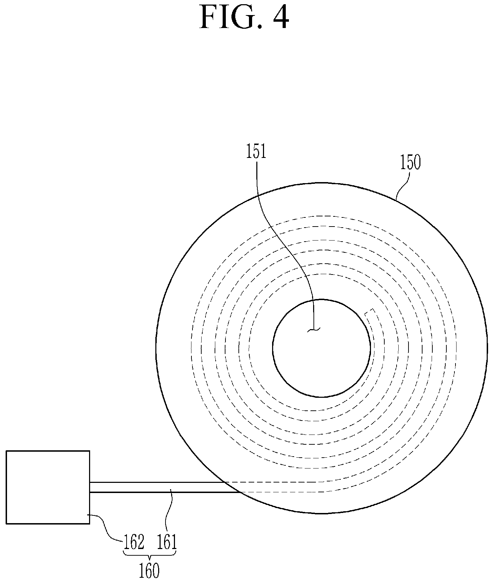

FIG. 4 is a plan view seen from above with a fixing member and cooling unit extracted.

Referring FIG. 4 and FIG. 1, the grinding apparatus 100 for the rechargeable battery material according to one or more embodiments may further include a cooling unit 160.

The cooling unit 160 cools the fixing member 150.

The cooling unit 160 may include a heat exchange member 161 and a cooler 162, for example.

The heat exchange member 161 is installed inside the fixing member 150 and exchanges heat with the fixing member 150. The heat exchange member 161 may be a heat pipe, for example.

The cooler 162 is installed outside the body member 110 and connected to the heat exchange member 161.

In the cooling unit 160 as described above, the inside of the heat exchange member 161 may be filled with a refrigerant (e.g., coolant). Also, the cooler 162 may circulate the refrigerant. The cooler 162 may be, for example, a pump, but the present disclosure is not limited thereto.

The rotation member 130 rotates, and as a result, the raw material may have substantially continuous friction (or collision) with the fixing member 150. In this process, the heat generated by the fixing member 150 may be transferred to the raw material. The cooling unit 160 may cool the fixing member 150 to prevent or reduce the raw material from being overheated by the heat generated by the fixing member 150.

The higher the temperature of the raw material, the less smoothly grinding may occur, resulting in larger particles or a blockage due to an internal agglomeration. However, as the cooling unit 160 cools the fixing member 150 as described above, the temperature of the raw material may be maintained at an appropriate or suitable temperature suitable for the grinding.

The grinding apparatus 100 for the rechargeable battery material according to one or more embodiments as described above includes the rotation member 130 including the first pattern 132, the second pattern 133, and the grinding portion 134, thereby making the raw material more uniform in size than with a comparable grinding apparatus.

It may be confirmed through a following grinding experiment that the grinding apparatus 100 for the rechargeable battery material according to one or more embodiments sprays (e.g., grinds) raw material more uniformly (e.g., substantially uniformly) than the related art grinding apparatus.

The grinding experiment was conducted by grinding the raw material for 3 seconds by using the grinding apparatus according to one or more embodiments and the grinding apparatus according to the comparative example.

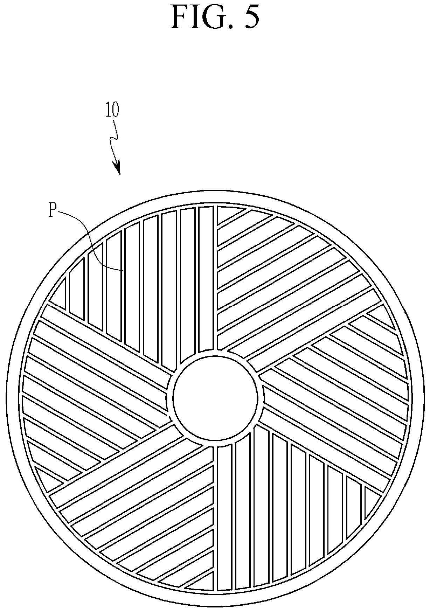

The grinding apparatus according to one or more embodiments is a grinding apparatus including the rotation member shown in FIG. 2. Also, the grinding apparatus according to the comparative example as shown in FIG. 5 is a grinding apparatus 10 including a rotation member having only a first pattern P without a second pattern.

Table 1 shows a ratio occupied by particles of a specific size in the raw material ground with the grinding apparatus according to one or more embodiments and the grinding apparatus according to the comparative example. Here, the total weight of the raw material is 100 without any numerical value (or unit). The ratio occupied by the particles of each size represents the ratio of the weight of all particles at that size to the total weight of the raw material.

**Table 1**

| Particle size | Ratio of Embodiment | Ratio of Comparative Example |
|---|---|---|
| Exceeding 2000 µm | 0.24 | 30.35 |
| 2000 - 1000 µm | 3.12 | 25.27 |
| 1000 - 500 µm | 83.62 | 12.27 |
| 500 - 300 µm | 4.46 | 11.24 |
| 300 - 150 µm | 6.10 | 9.38 |
| Less than 150 µm | 2.46 | 11.49 |

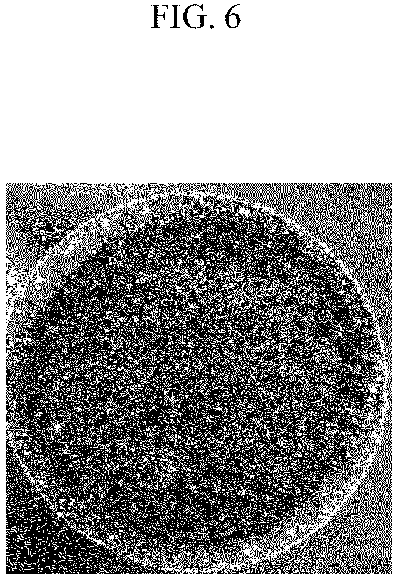

Referring to Table 1, it may be confirmed that the highest ratio in the sizes of the particles of the raw material ground by the grinding apparatus according to one or more embodiments was 83.62, and most of the raw material was ground to the size of 1000 - 500 µm. That is, as shown in FIG. 6, the raw material was ground to a substantially uniform size.

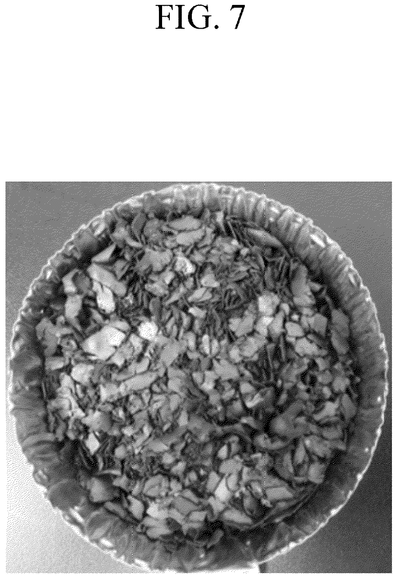

In contrast, returning to Table 1, in the case of the raw material ground with the grinding apparatus according to the comparative example, the ratio of the particles with sizes exceeding 2000 µm is 30.35, the ratio of the particles with sizes between 2000 and 1000 µm is 25.27, and the ratio of the particles with sizes between 1000 and 500 µm is 12.27. As shown in FIG. 7, the raw material was ground into various (e.g., non-uniform) sizes.

As described above, the grinding apparatus according to one or more embodiments grind the raw material more uniformly than the grinding apparatus according to the comparative example. Through this experiment, it may be confirmed that the grinding apparatus according to one or more embodiments sprays (e.g., grinds) the raw material more uniformly than the related art grinding apparatus. That is, it may be confirmed that the grinding apparatus according to one or more embodiments grinds the raw material into more uniform particle sizes than the related art grinding apparatus.

Unless otherwise defined, in the present disclosure, the term "particle diameter" or "particle size" refers to an average diameter if particles are spherical and refers to an average major axis length if particles are non-spherical. The average particle size may be measured by a suitable method (e.g., known to those skilled in the art), for example, may be measured by a particle size analyzer, or may be measured by a transmission electron microscopic image or a scanning electron microscopic image. In one or more embodiments, it is possible to obtain an average particle size value by measuring utilizing a dynamic light scattering method, performing data analysis, counting the number of particles for each particle size range, and calculating from this. Unless otherwise defined, the average particle size may refer to the size (D₅₀) of particles having a cumulative volume of 50 volume% in the particle size distribution. As used herein, if (e.g., when) a definition is not otherwise provided, the average particle size refers to the size (D₅₀) of particles having a cumulative volume of 50 volume% in the particle size distribution that is obtained by measuring the size (diameter or length of the major axis) of about 20 particles at random in a scanning electron microscope image.

A battery manufacturing device, a grading apparatus, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art, in view of the present disclosure in its entirety, would appreciate that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

The drawings referred to and the detailed description of the present disclosure are just examples that are used for describing the present disclosure and not used to limit the meaning or the scope of the present disclosure recited in the claims. Therefore, those skilled in the art to which the disclosure pertains could easily understand that one or more suitable modifications and equivalent embodiments may be possible. Accordingly, the technical scope of the present disclosure is not intended to be limited to the contents set forth in the detailed description of the specification, but is intended to be defined by the appended claims, and equivalents thereof.

### Reference Numerals

| | | | |
|---|---|---|---|
| 100: | grinding apparatus for rechargeable battery material | | |
| 110: | body member | 111: | inlet |
| 112: | outlet | 130: | rotation member |
| 131: | disk | 132: | first pattern |
| 132a: | first line | 133: | second pattern |
| 133a: | second line | 134: | grinding portion |
| 135: | rotation blade | 136: | grinding region |
| 140: | driving member | 150: | fixing member |
| 151: | penetrating portion | 160: | cooling unit |
| 161: | heat exchange member | 162: | cooler |

## Claims

1. A grinding apparatus (10, 100) comprising:
a body member (110) comprising an inlet (111) through which a raw material is introduced;
a fixing member (150) inside the body member (110);
a rotation member (130, 230) inside the body member (110) and spaced from the fixing member (150); and
a driving member (140) outside of the body member (110) and configured to rotate the rotation member (130, 230),
wherein the rotation member (130, 230) comprises:
a disk (131) coupled to the driving member (140);
a first pattern (132) inserted to a set depth on the disk (131) and comprising a plurality of first lines (132a) parallel to each other;
a second pattern (133) inserted at a set depth on the disk (131) and comprising a plurality of second lines (133a) parallel to each other, the plurality of second lines (133a) crossing the plurality of first lines (132a); and
a plurality of grinding portions (134) between the plurality of first lines (132a) and the plurality of second lines (133a), and protruding toward the fixing member (150) to grind the raw material, and
wherein the grinding apparatus (10, 100) is a grinding apparatus (10, 100) for a rechargeable battery material.

2. The grinding apparatus (10, 100) as claimed in claim 1, wherein:
the plurality of second lines (133a) are positioned to be normal to the plurality of first lines (132a).

3. The grinding apparatus (10, 100) as claimed in claim 1 or 2, wherein:
the plurality of second lines (133a) are positioned to be inclined to the plurality of first lines (132a).

4. The grinding apparatus (10, 100) as claimed in claims 1 to 3, further comprising:
a cooling unit (160) configured to cool the fixing member (150).

5. The grinding apparatus (10, 100) as claimed in claim 4, wherein:
the cooling unit (160) comprises:
a heat exchange member (161) installed inside the fixing member (150) and configured to perform heat exchange with the fixing member (150); and
a cooler (162) installed outside of the body member (110) and connected to the heat exchange member (161) and/or wherein:
a refrigerant is filled inside the heat exchange member (161), and
the cooler (162) is configured to circulate the refrigerant.

6. The grinding apparatus (10, 100) as claimed in claims 1 to 5, wherein:
the fixing member (150) comprises an opening corresponding to the inlet (111) of the body member (110) to allow raw material to pass through.

7. The grinding apparatus (10, 100) as claimed in claims 1 to 6, wherein:
the rotation member (130, 230) further comprises a rotation blade (135) installed in a central part of the disk (131) and configured to grind the raw material.

8. The grinding apparatus (10, 100) as claimed in claims 1 to 7, wherein:
the body member (110) comprises an outlet (112) through which the raw material is discharged and/or wherein:
the outlet (112) is positioned on a lower side of the body member (110).

9. The grinding apparatus (10, 100) as claimed in claims 1 to 8, wherein:
the rotation member (130, 230) comprises a plurality of grinding regions (136).

10. The grinding apparatus (10, 100) as claimed in claim 9, wherein:
the plurality of grinding regions (136) are each positioned at a set angle relative to a center of the disk (131).

11. The grinding apparatus (10, 100) as claimed in claim 9 or 10, wherein:
the first pattern (132) in a grinding region (136) from among the plurality of grinding regions (136) is arranged at a set angle to the first pattern (132) in an adjacent grinding region (136).

12. The grinding apparatus (10, 100) as claimed in claims 9 to 11, wherein:
the second pattern (133) in a grinding region (136) from among the plurality of grinding regions (136) are arranged at a set angle to the second pattern (133) in an adjacent grinding region (136) and/or wherein:
the rotation member (130, 230) comprises six grinding regions (136).

13. The grinding apparatus (10, 100) as claimed in claims 1 to 12, wherein:
a vertical cross-section of the plurality of grinding portions (134) has a trapezoidal shape.

14. The grinding apparatus (10, 100) as claimed in claims 1 to 13, wherein:
a distance (H) between tops of adjacent grinding portions (134) in the rotation member (130, 230) is in a range of 3 mm to 6 mm and/or wherein:
an angle (M) between adjacent grinding portions (134) in the rotation member (130, 230) is in a range of 30 degrees to 50 degrees.

15. The grinding apparatus (10, 100) as claimed in claims 1 to 14, wherein:
the disk (131) of the fixing member (150) and the rotation member (130, 230) have corresponding sizes and/or wherein:
the fixing member (150) has a disk (131) shape.
